# EUROPÄISCHE PATENTANMELDUNG

(11) **EP 4 219 642 A1**
(43) Veröffentlichungstag der Anmeldung: **02.08.2023**
(21) Anmeldenummer: 23159356.7
(22) Anmeldetag: 22.10.2018
(51) Int. Cl.: C09J 5/00, C09J 9/00, C09D 5/00, C09J 163/04

(54) **VERFAHREN ZUR ERZEUGUNG OPAKER BESCHICHTUNGEN, VERKLEBUNGEN UND VERGÜSSE SOWIE HÄRTBARE MASSE ZUR VERWENDUNG IN DEM VERFAHREN**

(30) Priorität: 09.11.2017 DE 102017126215
(62) Teilanmeldung aus: 18795959.8
(71) Anmelder: DELO Industrie Klebstoffe GmbH & Co. KGaA, 86949 Windach (DE)
(72) Erfinder: UHL, Gerald, 86949 Windach (DE); KIENZLE, Philipp, 86949 Windach (DE); KREUL, Kilian, 86949 Windach (DE); BRIEM, Marko, 86949 Windach (DE)
(74) Vertreter: Prinz & Partner mbB

(57) **Zusammenfassung**

Die Erfindung betrifft ein Verfahren zur Erzeugung eines opaken Vergusses, einer Verklebung oder Beschichtung unter Verwendung einer härtbaren Masse, die oberhalb einer ersten Temperatur durchstrahlbar ist und die eine reversible thermochrome Komponente enthält, wobei das Verfahren die folgenden Schritte umfasst: a) Dosieren der härtbaren Masse auf ein erstes Substrat; b) Wahlweise Zuführen eines zweiten Substrates zur härtbaren Masse; c) Erwärmen der härtbaren Masse auf mindestens eine zweite Temperatur oberhalb der ersten Temperatur, die ausreichend ist, um einen Farbumschlag der der thermochromen Komponente hin zu einem durchstrahlbaren Zustand hervorzurufen; d) Belichten der härtbaren Masse im durchstrahlbaren Zustand mit aktinischer Strahlung einer geeigneten Wellenlänge bei der zweiten Temperatur, um eine erste Polymerisationsreaktion zu initiieren; und e) Abkühlen der gehärteten Masse auf oder unter die erste Temperatur; und wobei die härtbare Masse eine durch kationische Polymerisation härtbare Masse auf Epoxidbasis ist. Ferner wird eine härtbare Masse zur Verwendung in dem Verfahren beschrieben.

## Beschreibung

### GEBIET DER ERFINDUNG

Die Erfindung betrifft ein Verfahren zum Erzeugen eines opaken Vergusses, einer Verklebung oder Beschichtung unter Verwendung einer härtbaren Masse, die mindestens eine thermochrome Komponente enthält.

### TECHNISCHER HINTERGRUND

Im Stand der Technik wird die Verwendung thermochromer Farbstoffe beispielsweise im Bereich von Dentalmassen, Sicherheitsetiketten, Lacken, Tinten aber auch in Klebstoffen beschrieben. Die unterschiedlichen Ansätze zeichnen sich dadurch aus, dass je nach Aufgabenstellung und Anwendung reversible oder irreversible thermochrome Farbstoffe zum Einsatz kommen.

Beispiele für reversible thermochrome Farbstoffe werden in der US 5,919,404 oder der EP 2 873 708 A1 beschrieben. Die US 2009/0278090 A1 und US 8,889,590 offenbaren Verbindungen zur Verwendung als irreversible thermochrome Farbstoffe.

Die DE 10 2006 042 488 A1 offenbart Kleb- und Dichtstoffe, welche mindestens eine thermochrome Komponente enthalten, die oberhalb von 140 °C ihre Farbe irreversibel ändert. Der Farbumschlag soll anzeigen, ob im Rahmen der thermischen Aushärtung die für die härtbare Masse mindestens benötigte Härtungstemperatur erreicht wurde.

Die US 8,410,191 B2 beschreibt eine dentale Abformmasse mit einer reversiblen thermochromen Komponente, die durch einen Farbumschlag das Erreichen einer gewissen Mindesttemperatur im Munde des Patienten anzeigt. Dies erlaubt Zahnärzten ein besseres Abschätzen der benötigten Aushärtezeit für die Dentalmasse.

Beide Druckschriften stellen somit eine zusätzliche Detektionsmöglichkeit mit Bezug auf den Fortschritt der Aushärtung bereit. Eine Verwendung zur gezielten Erzeugung einer opaken Verklebung oder eines opaken Vergusses wird in diesen Druckschriften nicht beschrieben. Ein Bedürfnis nach opaken Massen existiert jedoch vor allem im Bereich des Chipvergusses, der Sensoren- bzw. Kameratechnik und bei optischen Bauelementen.

Die EP 3 202 794 A1 offenbart radikalisch strahlungshärtbare Zusammensetzungen, die einen Leukofarbstoff und einen photolatenten Säurebildner zusammen mit einem tertiären Amin enthalten, und die nach der Bestrahlung einen Farbumschlag zeigen. Die Zusammensetzungen machen sich zu Nutze, dass der enthaltene radikalische Photoinitiator schneller zu einer Polymerisation führt, als die photolatente Säure freigesetzt wird. Dadurch können hohe durchstrahlbare Schichtdicken erreicht werden, bevor der Farbstoff säureinduziert in eine opake Form umschlägt. Die offenbarten Massen eignen sich jedoch nicht für tiefe Vergüsse und lange Bestrahlungszeiten, da durch den Umschlag des Farbstoffes in die opake Form, tiefere Schichten des Vergusses nicht mehr durch Bestrahlung erreicht werden können.

Bei der Fertigung von Kameramodulen und optischen Bauelementen werden vielfach dualhärtende Massen eingesetzt, die sowohl durch aktinische Strahlung als auch Wärme gehärtet werden können. In den sogenannten "Active Alignment Prozessen" wird nach dem Dosieren eines Klebstoffes der optische Aufbau des Kameramoduls auf den nicht ausgehärteten Klebstoff platziert und mit Hilfe eines Mikromanipulators relativ zum Bildsensor bewegt. Dies geschieht bei eingeschaltetem Sensor unter Auswertung von optischen Messsignalen. Die Position des optischen Aufbaus oder alternativ die des Sensors wird in verschiedenen Ebenen so lange bewegt, bis eine ausreichend hohe Güte der Ausrichtung erreicht wurde. Die entsprechende Position wird durch Bestrahlung des Klebstoffes mit aktinischer Strahlung fixiert. Diese Fixierung erlaubt den weiteren Transport des Bauteils und einen anschließenden Warmhärtungsschritt, ohne dass es zu einem Verlust der Ausrichtung kommt. Um eine möglichst große fixierte Zone bei der Bestrahlung und damit eine möglichst stabile Ausrichtung zu erhalten ist es entscheidend, dass die Masse eine ausreichende Durchstrahlbarkeit aufweist.

Neben hohen Lichtfixierfestigkeiten fordern die Hersteller von Kameramodulen jedoch gleichzeitig möglichst optisch dichte Aufbauten, um die Anteile an Streulicht gering zu halten, die den Sensor erreichen können. Die Anforderung an eine hohe Durchstrahlbarkeit steht dabei in Gegensatz zu der Forderung nach einer möglichst hohen Blickdichtigkeit. Bisher werden diese Anforderungen von keiner am Markt erhältlichen Masse gleichzeitig erfüllt.

Die US 2008/0118241 A1 und die US 2011/0037886 A1 sehen vor, das Streulicht durch Aufbringen von opaken Beschichtungen oder eine zusätzliche Verkapselung entlang des streulichtempfindlichen optischen Aufbaus eines Kameramoduls zu minimieren. Dies erfordert zwingend einen zusätzlichen Prozessschritt oder komplexere Modulaufbauten. Beim großflächigen Einsatz eines blickdichten Verkapselungsmaterials, das in Kontakt mit unterschiedlichen Materialien des Kameramoduls steht, können unter wechselnden Temperaturbedingungen Spannungen auftreten, die auf die verschiedenen thermischen Ausdehnungskoeffizienten zurückgeführt werden können und die in der Folge die Zuverlässigkeit des Kameramoduls senken.

Auch bei der Fertigung von Chipmodulen für Chipkarten gehört der Verguss der Chips zum Schutz vor Umwelteinflüssen seit langem zum Stand der Technik. Viele Hersteller wünschen sich neben dem reinen mechanischen Schutz aber auch einen zusätzlichen Schutz vor dem Auslesen etwaiger Informationen in Bezug auf das Chipfabrikat oder die verwendete Logik. So können bereits mit Licht des sichtbaren Spektrums bei Wellenlängen von 400 nm bis 700 nm und unter Verwendung von optischen Mikroskopen unter Umständen geheime Schlüssel ausgelesen werden. Eine derartige Analyse des Chips würde sich durch Verwendung von opaken Vergussmassen unterbinden oder erschweren lassen.

### ZUSAMMENFASSUNG DER ERFINDUNG

Der vorliegenden Erfindung liegt die Aufgabe zu Grunde, ein einfaches Verfahren zum Verkleben, Vergießen oder Beschichten von Bauteilen und die dazugehörigen Massen bereitzustellen, die nach der Härtung der Massen dauerhaft opak erscheinen, ohne dass aufwendige Verfahrensmaßnahmen getroffen werden müssen.

Erfindungsgemäß wird diese Aufgabe durch ein Verfahren nach Anspruch 1 und eine härtbare Masse nach Anspruch 9 gelöst.

Weitere Ausführungsformen der Erfindung sind in den Unteransprüchen angegeben, die wahlweise miteinander kombiniert werden können.

Das erfindungsgemäße Verfahren zur Herstellung eines opaken Vergusses, einer Verklebung oder Beschichtung wird unter Verwendung einer härtbaren Masse durchgeführt, die oberhalb einer ersten Temperatur durchstrahlbar ist und die eine reversible thermochrome Komponente enthält, wobei das Verfahren die folgenden Schritte umfasst:
a) Dosieren der härtbaren Masse auf ein erstes Substrat;
b) Wahlweise Zuführen eines zweiten Substrates zur härtbaren Masse;
c) Erwärmen der härtbaren Masse auf mindestens eine zweite Temperatur oberhalb der ersten Temperatur, die ausreichend ist, um einen Farbumschlag der der thermochromen Komponente hin zu einem durchstrahlbaren Zustand hervorzurufen;
d) Belichten der härtbaren Masse im durchstrahlbaren Zustand mit aktinischer Strahlung einer geeigneten Wellenlänge bei der zweiten Temperatur, um eine Polymerisationsreaktion zu initiieren; und
e) Abkühlen der gehärteten Masse auf oder unter die erste Temperatur;
wobei die härtbare Masse eine durch kationische Polymerisation härtbare Masse auf Epoxidbasis ist.

Die zur Durchführung des erfindungsgemäßen Verfahrens verwendete härtbare Masse umfasst ein härtbares Harz sowie mindestens eine reversible thermochrome Komponente.

Erfindungsgemäß werden härtbare Harze auf Basis von Epoxiden eingesetzt, die durch kationische Polymerisation vernetzen.

Bevorzugt ist die härtbare Masse eine einkomponentige härtbare Masse. Derartige einkomponentige Massen lassen sich besonders einfach dosieren und verarbeiten.

Das erfindungsgemäße Verfahren zeichnet sich somit durch eine hohe Flexibilität aus und kann an unterschiedliche Anwendungen mit unterschiedlichen Anforderungen an die jeweilige ausgehärtete Masse angepasst werden.

Zur Erzeugung einer blickdichten, opaken Beschichtung oder Verklebung ist lediglich ein Prozessschritt erforderlich, bei dem unter Wärmeeintrag die thermochrome Komponente aktiviert und der Farbumschlag der thermochromen Komponente erreicht wird.

Wahlweise enthält die härtbare Masse zusätzlich einen wärmelatenten Säurebildner. Es hat sich gezeigt, dass die Anwesenheit einer aus dem wärmelatenten Säurebildner durch Erwärmen freigesetzten Säure den Farbumschlag der thermochromen Komponente begünstigt.

Im Sinne der Erfindung bedeutet "durchstrahlbar", dass die Masse einen UV-VIS-Transmissionsgrad in einem Spektralbereich von 380 bis 1100 nm und einer Schichtdicke von 200 µm aufweist, der mindestens 75 % beträgt.

"Opaker Zustand" bedeutet, dass der UV-VIS-Transmissionsgrad der Masse bei 450 nm und einer Schichtdicke von 200 µm nach der Durchführung des erfindungsgemäßen Verfahrens um mindestens 25 % geringer ist als im durchstrahlbaren Zustand.

"Einkomponentig" bedeutet, dass alle Komponenten der härtbaren Masse zusammen in einer Mischung vorliegen.

"Wärmelatenter Säurebildner" bedeutet, dass der Säurebildner bei Raumtemperatur stabil ist und erst bei Erwärmen und Erreichen einer vorbestimmten höheren Temperatur eine Säure, vorzugsweise eine Brönstedt-Säure, freisetzt.

Die erste Temperatur, bei der die härtbare Masse appliziert und bestrahlt wird, liegt bevorzugt in einem Bereich von 10 °C bis 40 °C, besonders bevorzugt bei der Umgebungstemperatur von etwa 20 °C bis 30 °C.

Die zweite Temperatur, bei der die thermochrome Komponente aktiviert und der Farbumschlag ausgelöst wird, liegt bevorzugt mindestens 20 °C über der ersten Temperatur, weiter bevorzugt mindestens 30 °C und besonders bevorzugt mindestens 40 °C über der ersten Temperatur. Ein hinreichender Abstand zwischen der ersten und zweiten Temperatur erlaubt eine sichere Steuerung des Verfahrens und gewährleistet, dass die härtbare Masse während einer stahlungsinduzierten Härtung über die gesamte Schichtdicke durchstrahlbar bleibt.

Bevorzugt liegt die zweite Temperatur in einem Bereich von 60 bis 120 °C. Soweit die härtbare Masse einen wärmelatenten Säurebildner enthält, liegt die Aktivierungstemperatur des wärmelatenten Säurebildners, bei der die Säure freigesetzt wird, bevorzugt in einem Bereich von 60 bis 160 °C. Besonders bevorzugt ist die Aktivierungstemperatur des wärmelatenten Säurebildners gleich oder kleiner als die zweite Temperatur.

Die Schritte c) und d) des erfindungsgemäßen Verfahrens können aber auch gleichzeitig durchgeführt werden. Unter Umständen kann sogar die Exothermie der strahlungsinduzierten Polymerisationsreaktion zur Aktivierung der thermochromen Komponente ausreichen, so dass kein separates Erwärmen erfolgen muss.

### BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn zu verstehen sind.

In einer nicht erfindungsgemäßen Variante eines Referenzverfahrens werden dualhärtende Massen verwendet, die sowohl durch Bestrahlen mit aktinischer Strahlung als auch wärmeinduziert gehärtet werden können, und die eine irreversible thermochrome Verbindung enthalten. Diese Massen enthalten ferner einen wärmelatenten Säurebildner sowie zusätzlich einen photolatenten Säurebildner.

Das Verfahren zum Erzeugen einer opaken Verklebung, eines Vergusses oder einer Beschichtung unter Verwendung einer durch Licht und Wärme dualhärtbaren Masse nach dem Referenzverfahren umfasst bevorzugt die folgenden Schritte:
a) Dosieren der härtbaren Masse auf ein erstes Substrat;
b) Wahlweise Zuführen eines zweiten Substrats zu der Masse;
c) Belichten der Masse mit aktinischer Strahlung einer geeigneten Wellenlänge bei der ersten Temperatur, um den photolatenten Säurebildner zu aktivieren und eine erste Polymerisationsreaktion zu initiieren;
d) Erwärmen der belichteten Masse auf mindestens die zweite Temperatur, die ausreichend ist, um den Farbumschlag der thermochromen Komponente hervorzurufen, und Aushärten der Masse.

Im Referenzverfahren erfolgt der erste Härtungsschritt c) strahlungsinduziert und der zweite Härtungsschritt d) thermisch. Während der strahlungsinduzierten Härtung in Schritt c) bleibt die Masse durchstrahlbar. Der thermische Härtungsschritt d) kann stufenweise durchgeführt werden. Beispielsweise kann das Aushärten der belichteten Masse in einem Temperschritt oberhalb der zweiten Temperatur erfolgen, nachdem die thermochrome Komponente aktiviert wurde, oder der Temperschritt kann zur vollständigen Aushärtung der Masse durchgeführt werden, nachdem die Masse auf mindestens die zweite Temperatur erwärmt und der Farbumschlag der thermochromen Komponente herbeigeführt wurde.

Das thermische Aushärten der belichteten Masse und die Aktivierung der thermochromen Komponenten können aber auch in einem einzigen Schritt durchgeführt werden. Dies bedeutet, dass schon beim Erwärmen der belichteten Masse in Schritt d) mindestens die zweite Temperatur erreicht und der wärmelatente Säurebildner aktiviert wird, so dass die Masse aushärtet und durch den Farbumschlag der thermochromen Komponente in einen opaken Zustand übergeht.

Gemäß einer weiteren Variante können auch die Schritte c) und d) gemeinsam in einer Stufe durchgeführt werden. Die Masse kann also schon während der Belichtung erwärmt werden, wobei das Erwärmen durch separaten Wärmeeintrag von außen oder durch Ausnutzen der Reaktionswärme der strahlungsinduzierten Polymerisation erfolgen kann.

Die Durchführung des Referenzverfahrens kann mit dualhärtenden, kationisch polymerisierbaren Massen erfolgen, die zur strahlungsinduzierten Härtung einen photolatenten Säurebildner enthalten und die nach der Bestrahlung zur vollständigen Aushärtung einer Wärmebehandlung unterzogen werden. Der in diesen Massen zusätzlich enthaltene wärmelatente Säurebildner kann sowohl zur thermisch induzierten Aushärtung der belichteten Massen als auch zur Aktivierung des Farbumschlags der thermochromen Komponente dienen.

Im Falle von Massen mit kationisch polymerisierbaren Harzen, die bereits während der Bestrahlung in Schritt c) eine ausreichende Exothermie entwickeln, um die zweite Temperatur zu erreichen und den Farbumschlag der thermochromen Komponente hervorzurufen, muss kein separater Wärmeeintrag von außen erfolgen. Das Ausmaß der durch die strahlungsinduzierte Polymerisation in Schritt c) freigesetzten verfügbaren Wärme für die Warmhärtung und/oder den Farbumschlag ist außer von der Zusammensetzung der Masse auch stark vom dosierten Volumen, den für die Substrate verwendeten Materialien und der Bestrahlungsdosis abhängig. Da die kationische Polymerisation selbsterhaltend abläuft, härtet die Masse auch ohne zusätzlichen Temperschritt durch.

Die oben beschriebenen Varianten des Referenzverfahrens umfassen jeweils härtbare Massen, die eine irreversible thermochrome Komponente und einen wärmelatenten Säurebildner enthalten.

Das erfindungsgemäße Verfahren zur Herstellung einer opaken Verklebung, eines Vergusses oder einer Beschichtung umfasst die Verwendung einer härtbaren Masse, die eine reversible thermochrome Komponente enthält. In diesem Fall muss kein zusätzlicher wärmelatenter Säurebildner in der Masse enthalten sein.

Das erfindungsgemäße Verfahren zur Herstellung einer opaken Verklebung, eines Vergusses oder einer Beschichtung unter Verwendung einer härtbaren Masse mit einer reversiblen thermochromen Komponente umfasst die folgenden Schritte:
a) Dosieren der härtbaren Masse auf ein erstes Substrat bei einer ersten Temperatur;
b) Wahlweise Zuführen eines zweiten Substrates zur härtbaren Masse;
c) Erwärmen der härtbaren Masse auf eine zweite Temperatur oberhalb der ersten Temperatur, die ausreichend ist, um einen Farbumschlag der der thermochromen Komponente hin zu einem durchstrahlbaren Zustand hervorzurufen;
d) Belichten der härtbaren Masse im durchstrahlbaren Zustand mit aktinischer Strahlung einer geeigneten Wellenlänge bei der zweiten Temperatur, um eine Polymerisationsreaktion zu initiieren; und
e) Abkühlen der gehärteten Masse auf die erste Temperatur.

Die härtbare Masse ist eine durch kationische Polymerisation härtbare Masse auf Epoxidbasis.

Das erfindungsgemäße Verfahren kann unter Verwendung von dualhärtenden Massen des oben beschriebenen, nicht erfindungsgemäßen Referenzverfahrens durchgeführt werden, aber auch mit rein strahlungshärtenden Massen auf Basis von epoxidhaltigen Harzen.

Falls die Massen zusätzlich zu einem durch Belichten mit aktinischer Strahlung aktivierbaren Härter noch einen wärmelatenten Härter enthalten, beispielsweise einen wärmelatenten Säurebildner, kann die belichtete Masse nach Schritt d) einem zusätzlichen Temperschritt unterzogen werden. Die belichtete Masse wird dazu auf eine Temperatur erwärmt, die ausreichend ist, um den wärmelatenten Härter in der Masse zu aktivieren und die Masse vollständig auszuhärten.

Die in dem erfindungsgemäßen Verfahren verwendete härtbare Masse mit der reversiblen thermochromen Komponente liegt bei der ersten Temperatur, vorzugsweise bei Raumtemperatur, in einem opaken Zustand vor. Die zweite Temperatur, bei der die Belichtung der härtbaren Masse erfolgt, wird so gewählt, dass sie am oder oberhalb des Farbumschlagspunktes der reversiblen thermochromen Komponente liegt. Bevorzugt liegt der Farbumschlagspunkt der reversiblen thermochromen Komponente und damit auch die zweite Temperatur mindestens 20 °C oberhalb der ersten Temperatur, besonders bevorzugt mindestens 30 °C. Erst beim Erwärmen auf die zweite Temperatur erfolgt daher ein Übergang der härtbaren Masse in einen transluzenten, durchstrahlbaren Zustand.

Bei Verwendung von dualhärtenden Massen, die zusätzlich einen wärmelatenten Härter enthalten, wird die Belichtung der härtbaren Masse bevorzugt in einem bestimmten Temperaturfenster durchgeführt, bevorzugt bei einer Temperatur von 60 °C bis 120 °C, in dem die Durchstrahlbarkeit der Masse gegeben ist. Bevorzugt liegt die zweite Temperatur, bei der die thermochrome Komponente in ihrer transluzenten Form vorliegt und die Belichtung durchgeführt wird, noch unterhalb der Aktivierungstemperatur des in der dualhärtenden Masse enthaltenen wärmelatenten Härters.

Ferner wird die reversible thermochrome Komponente bevorzugt so gewählt, dass die Farbumschlagtemperatur oberhalb der typischen Einsatztemperatur des verklebten Bauteiles oder Vergusses liegt. Damit bleibt der Verguss oder die Verklebung während der Anwendung des Bauteils opak.

In der beschriebenen Ausführungsform unter Verwendung einer reversiblen thermochromen Komponente stellt sich die Opazität des Vergusses, der Beschichtung oder der Verklebung ein, sobald die gehärtete Masse abkühlt und die Umschlagstemperatur des Farbstoffes unterschritten wird.

Durch die Verwendung einer reversiblen thermochromen Komponente ist es ferner möglich, die Güte der Verklebung, der Beschichtung oder des Vergusses nachträglich zu prüfen. Durch Erwärmen auf eine Temperatur oberhalb der Umschlagstemperatur kann beispielsweise im transluzenten Zustand beurteilt werden, ob der Verguss blasenfrei erfolgt ist oder ob bei Mängeln der Austausch eines Bauteils nötig ist. Alternativ ist auch direkt im Prozess nach dem Dosieren auf ein ausreichend warmes Substrat eine optische Prüfung des Bauteils in einem transzulenten Zustand der Masse möglich, bevor die Belichtung ausgeführt wird.

In der Fertigungspraxis kann es ferner sinnvoll sein, die beschriebenen Schritte nicht unmittelbar nacheinander auszuführen, sondern einzelne Schritte, wie beispielsweise den Belichtungsschritt, iterativ für mehrere Bauteile oder Bauteilgruppen durchzuführen, bevor eine Warmhärtung oder wahlweise ein Temperschritt für eine Vielzahl von produzierten Teilen auf einmal durchgeführt wird. Diese Prozessführung kann vor allem in Batchverfahren verwendet werden und erlaubt höhere Prozessgeschwindigkeiten als in rein konsekutiven, kontinuierlichen Prozessen. Daher sind von den oben beschriebenen Ausführungsformen des erfindungsgemäßen Verfahrens auch prozessbedingte Zwischenschritte umfasst, solange abschließend ein Farbumschlag der thermochromen Komponente sichergestellt ist und die ausgehärtete Masse in einem opaken Zustand vorliegt.

Im Folgenden werden die härtbaren Massen zur Durchführung des erfindungsgemäßen Verfahrens näher beschrieben.

### Komponente (A): thermochrome Komponente

Die thermochrome Komponente umfasst die im oben beschriebenen Stand der Technik bekannten Verbindungsklassen. Die im Folgenden genannten Beispiele sind dabei in keiner Form als erschöpfend oder einschränkend zu verstehen. Für das erfindungsgemäße Verfahren sind im Wesentlichen alle thermochromen Komponenten geeignet, die mit den härtbaren Massen kompatibel sind, deren Verarbeitung und Lagerstabilität nicht einschränken oder die Eigenschaften der gehärteten Massen negativ beeinflussen.

Beispiele für in der thermochromen Komponente verwendete Verbindungen sind Farbstoffe aus den Verbindungklassen der Spiropyrane, Triphenylmethane, Benzoxazine, Diazarhodaminlactone und Fluorane sowie Kombinationen davon.

Beispiele für kommerziell erhältliche reversible thermochrome Komponenten sind die unter den Handelsnamen TH30, TH40, TH60, Black (5C2X) - BF von den Firmen Coating Products oder NCC erhältlichen Produkte.

Die genannten thermochromen Komponenten werden entweder als organischer Farbstoff mit üblichen Zuschlagstoffen oder in verkapselter Form, oder in Form von Pigmenten erhalten und in den härtbaren Massen eingesetzt.

Die thermochrome Komponente (A) kann direkt in die Zusammensetzung der härtbaren Masse eingebracht oder eingelöst werden, oder als Masterbatch in Form einer Vorlösung oder Vormischung in geeigneten Harzkomponenten bereitgestellt werden.

Der Anteil der thermochromen Komponente (A) in der härtbaren Masse beträgt bevorzugt mindestens 0,05 Gew.-%, bevorzugt mindestens 0,1 Gew.-%, und höchstens 5 Gew.-%, bevorzugt höchstens 4 Gew.-%, und besonders bevorzugt höchstens 3 Gew.-%, bezogen auf das Gesamtgewicht der härtbaren Masse.

Der Farbumschlagspunkt der thermochromen Komponente liegt bevorzugt in einem Bereich von 60 bis 120 °C.

### Komponente (B): Wärmelatenter Säurebildner:

Die durch kationische Polymerisation härtbare Masse des erfindungsgemäßen Verfahrens kann wahlweise einen wärmelatenten Säurebildner enthalten. In den kationisch härtbaren Massen kann der wärmelatente Säurebildner eine Doppelfunktion erfüllen, da die beim Erwärmen des Säurebildners freigesetzte Säure sowohl zur Aktivierung des Farbumschlags der thermochromen Komponente als auch zur wärmeinduzierten Härtung der Massen verwendet werden kann.

Eine Verwendung von nicht wärmelatenten Säuren wie beispielsweise Mineralsäuren oder organischen Sulfonsäuren ist nicht bevorzugt, da diese keine Formulierung von lagerstabilen einkomponentigen Massen erlauben.

Geeignete wärmelatente Säurebildner auf Basis von quartären Benzylammoniumsalzen sind in der EP 0 343 690 A2 oder der WO 2005/097883 A1 beschrieben. Kommerziell verfügbare Produkte sind unter den Bezeichnungen K PURE CXC-1612 oder K-PURE CXC-1733 von King Industries erhältlich.

Ferner können auch aromatische Sulfonium- oder lodoniumsalze als thermisch aktivierbare, wärmelatente Säurebildner eingesetzt werden. Entsprechende Produkte sind unter den Bezeichnungen SAN-AID SI-80L und SAN-AID SI-100L von SAN-SHIN Chemical Industry Co., Ltd, erhältlich. Darüber hinaus können verschiedene Metallchelatkomplexe auf Basis von Titan oder Aluminium als wärmelatente Säurebildner zum Einsatz kommen.

Wärmelatente Säuren auf Basis von Aryliodonium- oder Arylsulfoniumsalzen, in denen Aluminatanionen als Gegenionen dienen, sind beispielsweise aus der WO 2017/03552 A1 bekannt.

Der wärmelatente Säurebildner (B) kann in der härtbaren Masse in einem Anteil von 0,01 bis 5 Gew.-% vorliegen, bevorzugt in einem Anteil von 0,05 - 3 Gew.-%, besonders bevorzugt in einem Anteil von 0,1 bis 1,5 Gew.-%, jeweils bezogen auf das Gesamtgewicht der härtbaren Masse.

Die Aktivierungstemperatur des wärmelatenten Säurebildners, bei der die Säure freigesetzt wird, liegt bevorzugt in einem Bereich von 60 bis 160 °C.

### Komponente (C): Härtbare Harze

Als Basis für die in dem erfindungsgemäßen Verfahren verwendeten härtbaren Harze kommen epoxidhaltige Harze und Verbindungen zum Einsatz. Geeignete Mischungen unterschiedlicher Harzkomponenten sind ebenfalls im Sinne der Erfindung. Im Folgenden werden die für die härtbaren Massen geeigneten Harzkomponenten näher erläutert.

Die Komponente (C) liegt in der erfindungsgemäßen härtbaren Masse bevorzugt in einem Anteil von 1-99 Gew.-%, weiter bevorzugt 10-70 Gew.-% und besonders bevorzugt von 20-50 Gew.-% vor, jeweils bezogen auf das Gesamtgewicht der Masse.

### Komponente (C1): epoxidhaltige Harzkomponenten

Die epoxidhaltige Komponente (C1) in den erfindungsgemäßen Massen umfasst mindestens eine mindestens difunktionelle epoxidhaltige Verbindung. Mindestens "difunktionell" bedeutet, dass die epoxidhaltige Verbindung mindestens zwei Epoxidgruppen enthält. Die Komponente (C1) kann beispielsweise cycloaliphatische Epoxide, aromatische und aliphatische Glycidylether, Glycidylester oder Glycidylamine und Mischungen davon umfassen.

Difunktionelle cycloaliphatische Epoxidharze sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexendioxid, Bis(3,4-Epoxycyclohexylmethyl)adipat, Dicyclopentadiendioxid, 1,2-Epoxy-6-(2,3-epoxypropoxy)hexahydro-4,7-methanindan.

Aromatische Epoxidharze können in den erfindungsgemäßen Massen ebenso verwendet werden. Beispiele für aromatische Epoxidharze sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan, Glycidylether von Tris(hydroxyphenyl)-ethan. Ferner können auch alle vollständig oder teilweise hydrierten Analoga aromatischer Epoxidharze eingesetzt werden.

Auch mit epoxidhaltigen Gruppen substituierte Isocyanurate und andere heterocyclische Verbindungen können in den erfindungsgemäßen Massen verwendet werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidharze in den erfindungsgemäßen Massen eingesetzt werden.

Ebenfalls im Sinne der Erfindung ist eine Kombination mehrerer epoxidhaltiger Verbindungen, von denen mindestens eine di- oder höherfunktionell ist.

Zusätzlich zu den mindestens difunktionellen epoxidhaltigen Komponenten können auch monofunktionelle Epoxide als reaktive Verdünner verwendet werden.

Beispiele für kommerziell erhältliche epoxidhaltige Komponenten (C1) sind Produkte, die unter den Handelsnamen CELLOXIDE^{™} 2021P, CELLOXIDE^{™} 8000 von Daicel Corporation, Japan, als EPIKOTE^{™} RESIN 828 LVEL, EPIKOTE^{™} RESIN 166, EPIKOTE^{™} RESIN 169 von Momentive Specialty Chemicals B.V., Niederlande, als Epilox^{™}-Harze der Produktreihen A, T und AF von Leuna Harze, Deutschland, oder als EPICLON^{™} 840, 840-S, 850, 850-S, EXA850CRP, 850-LC von DIC K.K., Japan, verfügbar sind.

Zusätzlich zu Epoxiden können für das erfindungsgemäße Verfahren auch kationisch polymerisierbare Harze eingesetzt werden, die Oxetan- und/oder Vinylethergruppen enthalten. Gemische verschiedener kationisch polymerisierbarer Harze sind ebenfalls im Sinne der Erfindung.

### Komponente (D): Härter

Der für die Aushärtung der härtbaren Harze im erfindungsgemäßen Verfahren verwendete Härter muss so gewählt sein, dass er zur Harzkomponente komplementäre funktionelle Gruppen enthält oder anderweitig reaktive Spezies erzeugt, die eine Härtung der härtbaren Harze durch Polymerisation oder Vernetzung herbeiführen. Der Härter kann Verbindungen umfassen, die durch Belichten oder Erwärmen reaktive kationische Spezies freisetzen und dadurch eine Polymerisation der härtbaren Harze initiieren.

### Komponente (D1): Photolatente Säurebildner

In den Ausführungsformen des erfindungsgemäßen Verfahrens kommen Epoxidmassen zum Einsatz, die mindestens einen photolatenten Säurebildner (D1) enthalten. Der Säurebildner umfasst bevorzugt Verbindungen, die in der Lage sind, durch Einwirkung von aktinischer Strahlung eine starke Säure freizusetzen. Die freigesetzte Säure katalysiert die kationische Polymerisation der Masse. Durch Bestrahlen mit aktinischer Strahlung aktivierbare Säurebildner werden im Folgenden auch als photolatente Säure bezeichnet.

Geeignete photolatente Säuren sind unter anderem aromatische Arylsulfoniumsalze, wie sie in WO 2003/072567 A oder WO 2003/008404 A beschrieben sind, oder die in WO 1998/002493 A oder US 6,306,555 beschriebenen Aryliodoniumsalze.

Als photolatente Säuren geeignete Oniumsalze werden darüber hinaus von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 beschrieben.

Als Anionen der Sulfonium- oder lodoniumsalze seien beispielhaft HSO₄⁻, PF₆⁻, SbF₆⁻, AsF₆⁻, Cl⁻, Br, I⁻, ClO₄⁻, PO₄⁻, SO₃CF₃⁻, Tosylat, Aluminate oder ein Borat-Anion wie etwa BF₄⁻ und B(C₆F₅)₄⁻ angeführt.

Kommerziell als photolatente Säuren verfügbare Photoinitiatoren auf Triarylsulfoniumbasis sind unter den Markennamen Chivacure 1176 von Chitec, als Irgacure PAG 290 von BASF SE oder als UVI-6976 und UVI-6974 von Dow Chemical Co. erhältlich.

Kommerziell als photolatente Säuren verfügbare Photoinitiatoren auf Diaryliodoniumbasis sind unter den Bezeichnungen UV1240 oder UV2257 von Deuteron und Bluesil 2074 von Rhodia erhältlich.

Neben photolatenten Säuren auf Basis von lodonium- und Sulfoniumionen sind auch nicht-ionische photolatente Säuren in den erfindungsgemäßen Massen verwendbar. Derartige Verbindungen auf Basis von Oximestern und Oximsulfonsäureestern werden in WO 2013/083505 A und in EP 1 124 832 A beschrieben. Kommerziell verfügbare nicht-ionische photolatente Säuren auf Basis von Oximsulfonsäureestern sind unter anderem unter den Bezeichnungen Irgacure PAG 103, Irgacure PAG 121 und Irgacure PAG 203, CGI 1907 von BASF SE erhältlich.

Ferner können als Komponente (D1) auch Triazinverbindungen oder Benzoinester als nicht-ionische photolatente Säuren genutzt werden.

Die in den erfindungsgemäßen Massen als Säurebildner eingesetzte photolatente Säure ist vorzugsweise durch aktinische Strahlung einer Wellenlänge von 200 bis 480 nm aktivierbar, besonders bevorzugt bei einer Wellenlänge von 320 bis 480 nm. Bei Bedarf kann die photolatente Säure mit einem geeigneten Sensibilisierungsmittel kombiniert werden.

Die voranstehenden Aufzählungen sind als beispielhaft für den photolatenten Säurebildner (D1) zu sehen und keineswegs als limitierend zu verstehen.

In den kationisch härtbaren Massen zur Verwendung im erfindungsgemäßen Verfahren, liegt der photolatente Säurebildner (D1) bevorzugt in einem Anteil von 0,01 bis 5 Gew.-% vor, weiter bevorzugt in einem Anteil von 0,05 - 3 Gew.-% und besonders bevorzugt in einem Anteil von 0,1 bis 1,5 Gew.-%, jeweils bezogen auf das Gesamtgewicht der härtbaren Masse.

Es ist weiterhin möglich, mehr als einen Säurebildner in den erfindungsgemäßen Massen zu verwenden. Beispielsweise können eine photolatente Säure und ein wärmelatenter Säurebildner kombiniert werden, um dualhärtende Massen bereitzustellen, die neben der Aktivierung durch aktinische Strahlung zusätzlich mit einer Möglichkeit zur thermischen Aktivierung ausgestattet sind.

### Komponente (E): Additive

Die härtbaren Massen können außer den vorgenannten Komponenten noch fakultative Bestandteile als Additive (E) enthalten. Die Additive (E) sind vorzugsweise aus der Gruppe der Füllstoffe, Reaktivverdünner und inerten Verdünnungsmitteln, Farbstoffe, Pigmente, Alterungsschutzmittel, Fluoreszenzmittel, Stabilisatoren, Beschleuniger, Sensibilisatoren, Haftvermittler, Trockenmittel, Vernetzer, Fließverbesserer, Benetzungsmittel, Thixotropierungsmittel, Flexibilisierer, polymeren Verdickungsmittel, Flammschutzmittel, Korrosionsinhibitoren, Weichmacher und Tackyfier ausgewählt.

Die vorangegangene Aufzählung an Additiven ist als beispielhaft und keineswegs limitierend zu verstehen.

### Formulierung der Massen für das erfindungsgemäße Verfahren:

Die Massen werden bevorzugt einkomponentig formuliert. Kationisch polymerisierbare Massen werden bevorzugt ohne tertiäre Amine als Beschleuniger oder Polymerisationsverzögerer formuliert.

Eine für die Durchführung des erfindungsgemäßen Verfahrens geeignete Masse zur Herstellung einer opaken Verklebung, eines Vergusses oder Beschichtung unter Verwendung einer kationisch polymerisierbaren, epoxidhaltigen Harzkomponente umfasst bevorzugt die folgende Zusammensetzung:
- 0,05 bis 5 Gew.-% einer reversiblen thermochromen Verbindung (A);
- 20 bis 80 Gew.-% einer mindestens difunktionellen epoxidhaltigen Komponente (C), umfassend mindestens eine cycloaliphatische Epoxidverbindung;
- 0,1 bis 1,5 Gew.-% eines photolatenten Säurebildners (D); und
- 1 bis 80 Gew.-% Additive (E).

### Anwendung der härtbaren Massen und des erfindungsgemäßen Verfahrens

Ein möglicher Einsatz des erfindungsgemäßen Verfahrens folgt der im Stand der Technik beschriebenen Fertigung von Chipmodulen. In Smartcard-Anwendungen erfolgt eine Verkapselung des Chips mit einer härtbaren Masse zum Schutz vor Umwelteinflüssen. In derartigen Verfahren bestehen hohe Ansprüche an die Prozessgeschwindigkeit und die Opazität der Verkapselung. Diese Ansprüche werden insbesondere durch das erfindungsgemäße Verfahren erfüllt.

Der Verguss der Chipmodule erfolgt in reel-to-reel Prozessen, bei denen die härtbaren Massen auf vorgeheizte Substrate dosiert werden. Nach dem Auftragen der opaken Masse wird diese durch den Wärmeeintrag innerhalb kurzer Zeit durchstrahlbar. Im transluzenten Zustand lässt sich die Polymerisation der Massen durch aktinische Strahlung initiieren. Nach dem Abkühlen gehen die gehärteten Massen wieder in einen opaken Zustand über. Bei Bedarf ist es möglich, durch erneutes Erwärmen die Güte der Verkapselung optisch zu kontrollieren.

### Definitionen und Testverfahren

### Bestrahlung

In den folgenden Ausführungsbeispielen wird, wenn nicht anders angegeben, unter Bestrahlung oder Belichtung die Bestrahlung mit einer LED-Lampe DELOLUX 80 / 400 (nominelle Wellenlänge 405 nm) der Firma DELO Industrie Klebstoffe mit einer Intensität von 200 ± 20 mW/cm² verstanden.

### Raumtemperatur

Raumtemperatur (RT) ist definiert als 23 °C ± 2 °C.

### DSC-Messungen

DSC-Messungen der Reaktivität erfolgen in einem dynamischen Differenzkalorimeter (DSC) vom Typ DSC 822e oder DSC 823e der Firma Mettler Toledo. Die Prüfung erfolgt analog zu DIN EN ISO 11357-1 und DIN EN ISO 11357-5. Die Bestrahlung erfolgte analog den oben angegebenen Parametern.

### UV-VIS Transmission

Die Transmission der Massen wurde mit einem UV-VIS Spektrometer des Typs SPECORD 50 PLUS, erhältlich von der Firma Analytik Jena, bestimmt. Dazu wurde die Masse jeweils zwischen zwei Glasobjektträgern (50 mm x 50 mm x 1,1 mm) aufgebracht. Ein Abstand von 200 µm wurde über Distanzdrähte eingestellt. Nach einer Referenzmessung gegen Luft erfolgte die Messung der flüssigen Probe zwischen den Glasobjektivträgern bei senkrechtem Strahlungseinfall. Die Transmission bei 450 nm wurde ausgewertet. Die Transmission der gehärteten Massen wurde analog bestimmt, nachdem diese wie angegeben gehärtet und einem Ofenprozess für 30 min bei 130 °C unterzogen wurden.

### Bestimmung der härtbaren Schichtdicke

Eine Aluminium-Ringform mit einem Durchmesser von 21 mm und einer Höhe von 1,5 cm wird mit der härtbaren Masse vollständig gefüllt und entsprechend den oben angegebenen Bestrahlungsparametern 10 sec lang bestrahlt. Nach Einhalten einer Wartezeit von 72 h bei Raumtemperatur wird die ausgehärtete Masse aus der Form entformt, nicht ausgehärtete Masse entfernt und die Schichtdicke der gehärteten Masse mit einem Messschieber bestimmt.

### Herstellung der härtbaren Massen

Zur Herstellung der in den folgenden Beispielen verwendeten härtbaren Massen werden zunächst die flüssigen Bestandteile gemischt und anschließend die Füllstoffe und wahlweise weitere Feststoffe mithilfe eines Laborrührwerks, Labordissolvers oder eines Speedmixers (Fa. Hauschild) eingearbeitet, bis eine homogene Masse entsteht. Massen, die Photoinitiatoren enthalten und die sensitiv gegenüber sichtbaren Licht sind, müssen entsprechend unter Licht außerhalb der Anregungswellenlänge der Photoinitiatoren oder Sensibilisatoren hergestellt werden.

In den nachfolgenden Tabellen ist die Zusammensetzung der härtbaren Massen unter Verwendung der folgenden Abkürzungen angegeben.

### Komponente (A): Thermochrome Komponente

- A1:: Kromagen Black K60-NH (irreversible thermochrome Komponente; erhältlich von Hallcrest)
- A2:: "+ 60 °C Black (5C2X)" (reversible thermochrome Komponente; erhältlich von Raimund Müller GmbH & Co. KG)

### Komponente (B): Wärmelatenter Säurebildner

- B1:: K-Pure CXC-1733 (quartäres Benzylammoniumsalz mit Hexafluoroantimonatanion; erhältlich von King Industries Inc.)

### Komponente (C): Härtbare Harze

### Komponente (C1): Epoxidhaltige Komponente

- C11:: Celloxide 2021P ((3',4'-Epoxycyclohexane)methyl 3,4-epoxycyclohexylcarboxylate, erhältlich von Daicel Corporation)
- C12:: jER YL 980 (Bisphenol-A-Diglycidylether; erhältlich von Mitsubishi Chemical Corporation)

### Komponente (D): Härter

- D21:: Irgacure^{®} 290 (Sulfonium-tetrakis[pentafluorophenyl]borat, erhätlich von BASF SE)
- D22:: Deuteron UV 1240 (Bis(dodecylphenyl)iodonium-hexafluoroantimonat 50 Gew.-% in Propylencarbonat; erhältlich von Fa. Deuteron)

### Komponenten (E): Additive

- E1:: Sensibilisator Anthracure UVS-1331 (9,10-Dibutoxyanthracen, erhältlich von Kawasaki Kasei Chemicals Ltd.)
- E2:: Sensibilisator Speedcure 2-ITX (2-Isopropylthioxanthon, erhältlich von Lambson Ltd.)
- E3:: Spezialschwarz 100 (Ruß; erhältlich von Fa. Degussa)
- E4:: Denka Fused Silica FB-5SDX (Silica-Füllstoff, erhältlich von Denka Company Ltd.)
- E5:: OXT 221 (Bis[1-Ethyl(3-oxetanyl)]methylether; erhältlich von Toagosei Co., Ltd.)

### Beispiel 1 (nicht erfindungsgemäß) und Vergleichsbeispiel 1

Die härtbare Masse gemäß Beispiel 1 in der nachfolgenden Tabelle 1 ist eine dualhärtende, durch Einwirkung von aktinischer Strahlung und Wärme kationisch härtbare Masse gemäß dem oben beschriebenen Referenzverfahren. Vergleichsbeispiel 1 zeigt eine kationisch härtbare Masse, jedoch ohne thermochrome Komponente. In den Massen gemäß Beispiel 1 und Vergleichsbeispiel 1 wird jeweils ein wärmelatenter Säurebildner verwendet.

**Tabelle 1: Härtbare Masse gemäß Referenzverfahren**

| **Komponente** | Beispiel 1 | Vergleichsbeispiel 1 |
|---|---|---|
| **(A)** | 0,2 Gew.- % **A1** | - |
| **(B)** | 0,5 Gew.-% **B1**(in 0,5 Gew.-% Propylen- carbonat) | 0,5 Gew.-% **B1**(in 0,5 Gew.-% Propylen-carbonat) |
| **(C)** | 31,2 Gew.-% **C11** | 31,3 Gew.-% **C11** |
| | 17 Gew.-% **C12** | 17 Gew.-% **C12** |
| **(D)** | 0,5 Gew.-% **D21** | 0,5 Gew.-% **D21** |
| (E) | 0,1 Gew.-% **E1** | 0,1 Gew.-% **E1** |
| | 50 Gew.-% **E4** | 50 Gew.-% **E4** |
| | | 0,1 Gew.-% **E3** |
| **Aushärtungsparameter** | Bestrahlung: 400 nm, 200 mW/cm², 10s; | |
| | Ofen: 30 min @ 130 °C (+72 h Wartezeit) | |
| Prozentuale Abnahme der Transmission | 29 % | 0 % |
| Härtbare Schichtdicke (bei 400 nm, 200 mW/cm², 10s +72h Wartezeit) | 575 µm | 214 µm |
| Optischer Eindruck | schwarz | schwarz |

Zur Durchführung des Verfahrens wird die Masse bei Umgebungstemperatur (20-30 °C) bestrahlt und dann im Ofen auf mindestens die zweite Temperatur erwärmt, um den Farbumschlag der thermochromen Komponente und die Aushärtung der Masse zu bewirken.

Die härtbare Masse von Beispiel 1 zeichnet sich durch eine hohe Transmission im flüssigen Zustand aus. Nach Durchführen des Verfahrens sinkt die Transmission in einer Schichtdicke von 200 µm um 29 % gegenüber ihrem Ursprungswert im nicht gehärteten Zustand.

Vergleichsbeispiel 1 zeigt eine Masse, die zum Erreichen einer hohen Opazität mit Ruß versetzt wurde. Die Transmission der Vergleichsmasse 1 ist sowohl vor als auch nach der Durchführung der Schritte des Verfahrens niedrig. Gleichzeitig beträgt die härtbare Schichtdicke der Masse von Vergleichsbeispiel 1 nur 214 µm und ist damit um über 50 % niedriger als die härtbare Schichtdicke der Masse von Beispiel 1, die unter Verwendung der gleichen Härtungsparameter 514 µm beträgt.

### Beispiel 2 und Vergleichsbeispiel 2

Die härtbare Masse gemäß Beispiel 2 in der nachfolgenden Tabelle 2 ist eine kationisch härtbare Masse auf Basis einer epoxidhaltigen Harzmasse, die strahlungsinduziert gehärtet und im erfindungsgemäßen Verfahren verwendet werden kann.

**Tabelle 2: Härtbare Masse gemäß der Erfindung**

| **Komponente** | | Beispiel 2 | Vergleichsbeispiel 2 |
|---|---|---|---|
| **(A)** | | 2 Gew.-% **A2** | - |
| | | - | - |
| **(C)** | | 95,99 Gew.-% **C11** | 97,92 Gew.-% **C11** |
| **(D)** | | 2 Gew.-% **D22** | 2 Gew.-% **D22** |
| **(E)** | | 0,01 Gew.-% **E2** | 0,01 Gew.-% **E2** |
| | | | 0,07 Gew.-% **E3** |
| **Aushärtungsparameter** | | 400 nm, 200 mW/cm², 10s bei 70°C (+72 h Wartezeit) | |
| Prozentuale Abnahme der Transmission | | n.b. | n.b. |
| Härtbare Schichtdicke (bei 400 nm, 200 mW/cm², 10s +72h Wartezeit) | | 327 µm | 0 µm |
| Optischer Eindruck | | schwarz | transparent |

| | | | |
|---|---|---|---|
| n.b. = nicht bestimmt | | | |

In der Masse gemäß Beispiel 2 wird eine reversible thermochrome Komponente verwendet. Bei einer Belichtung unter gleichzeitigem Temperatureintrag lässt sich die Masse von Beispiel 2 bis in einer Schichtdicke von 327 µm unter den angegebenen Bedingungen härten. Die Masse von Vergleichsbeispiel 2, die mit Ruß eingefärbt wurde und keine thermochrome Komponente enthält, weist dagegen bei einer Belichtungsdauer von 10 sec keine messbare gehärtete Schichtdicke auf.

Die nachfolgende Tabelle 3 zeigt den Einfluss der Konzentration der thermochromen Komponente in Massen gemäß dem Referenzverfahren. Mit zunehmendem Anteil an Komponente (A) sinkt die Reaktivität der Massen, was an den höheren Peakzeiten und Peakttemperaturen in Photo-DSC Messungen erkennbar ist. Die Ergebnisse zeigen weiter, dass bei einem Anteil der thermochromen Komponente von größer 5 Gew.-% in den Massen nicht mehr mit einer vollständigen Aushärtung der Massen gerechnet werden kann und die Masse nach Belichten und Erwärmen in einem flüssigen Zustand verbleibt.

**Tabelle 3: Variation des Anteils der thermochromen Verbindung**

| **Komponente** | Beispiel 3 | Beispiel 4 | Beispiel 5 | Beispiel 6 |
|---|---|---|---|---|
| **(A)** | 0,2 Gew.-% **A1** | 1,0 Gew.- % **A1** | 2,0 Gew.- % **A1** | 5,0 Gew.- % **A1** |
| **(B)** | 0,5 Gew.-% **B1** (in 0,5 Gew.-% Propylen- carbonat) | 0,5 Gew.-% **B1** (in 0,5 Gew.-% Propylen- carbonat) | 0,5 Gew.-% **B1** (in 0,5 Gew.-% Propylen- carbonat) | 0,5 Gew.-% **B1** (in 0,5 Gew.-% Propylencarbonat) |
| **(C)** | 32,3 Gew.-% **C11** | 32,3 Gew.-% **C11** | 32,3 Gew.-% **C11** | 32,3 Gew.-% **C11** |
| | 32,7 Gew.-% **C12** | 31,9 Gew.-% **C12** | 30,9 Gew.-% **C12** | 27,9 Gew.-% **C12** |
| **(D)** | 1 Gew.-% **D21** | 1 Gew.-% **D21** | 1 Gew.-% **D21** | 1 Gew.-% **D21** |
| **(E)** | 32,8 Gew.-% **E5** | 32,8 Gew.-% **E5** | 32,8 Gew.-% **E5** | 32,8 Gew.-% **E5** |
| Aushärtung | 400nm, 200mw/cm², 5 s + Ofen 30 min @ 130°C | | | |
| Peakzeit [s] | 3,0 | 4,9 | 6,7 | - |
| Peak- temperatur [°C] | 97 | 108 | 116 | - |
| Habitus | Fest, ausgehärtet, schwarz | Fest, ausgehärtet, schwarz | Fest, ausgehärtet, schwarz, | Flüssig, nicht ausgehärtet, schwarz |

## Patentansprüche

1. Verfahren zur Herstellung eines opaken Vergusses, einer Verklebung oder Beschichtung unter Verwendung einer härtbaren Masse, die oberhalb einer ersten Temperatur durchstrahlbar ist und die eine reversible thermochrome Komponente enthält, wobei das Verfahren die folgenden Schritte umfasst:
a) Dosieren der härtbaren Masse auf ein erstes Substrat;
b) Wahlweise Zuführen eines zweiten Substrates zur härtbaren Masse;
c) Erwärmen der härtbaren Masse auf mindestens eine zweite Temperatur oberhalb der ersten Temperatur, die ausreichend ist, um einen Farbumschlag der der thermochromen Komponente hin zu einem durchstrahlbaren Zustand hervorzurufen;
d) Belichten der härtbaren Masse im durchstrahlbaren Zustand mit aktinischer Strahlung einer geeigneten Wellenlänge bei der zweiten Temperatur, um eine Polymerisationsreaktion zu initiieren; und
e) Abkühlen der gehärteten Masse auf oder unter die erste Temperatur;
wobei die härtbare Masse eine kationisch härtbare Masse auf Epoxidbasis ist.

2. Verfahren nach Anspruch 1, **dadurch gekennzeichnet, dass** die härtbare Masse keinen zusätzlichen wärmelatenten Säurebildner enthält.

3. Verfahren nach Anspruch 1, **dadurch gekennzeichnet, dass** die härtbare Masse einen wärmelatenten Säurebildner enthält, bevorzugt in einem Anteil von 0,01 bis 5 Gew.-%, bezogen auf das Gesamtgewicht der härtbaren Masse.

4. Verfahren nach einem der Ansprüche 1 bis 3, **dadurch gekennzeichnet, dass** die härtbare Masse eine kationisch durch Einwirkung von aktinischer Strahlung härtbare Masse ist und eine photolatente Säure enthält.

5. Verfahren nach einem der vorhergehenden Ansprüche, **dadurch gekennzeichnet, dass** die härtbare Masse bei der ersten Temperatur in einem opaken Zustand vorliegt.

6. Verfahren nach einem der vorhergehenden Ansprüche, **dadurch gekennzeichnet, dass** die zweite Temperatur am oder oberhalb eines Farbumschlagpunktes der reversiblen thermochromen Komponente liegt.

7. Verfahren nach einem der vorhergehenden Ansprüche, **dadurch gekennzeichnet, dass** die zweite Temperatur mindestens 20 °C oberhalb der ersten Temperatur liegt.

8. Verfahren nach einem der vorhergehenden Ansprüche, **dadurch gekennzeichnet, dass** das Belichten der Masse in einem Temperaturbereich von 60 bis 120 °C erfolgt.

9. Härtbare Masse zur Durchführung des Verfahrens gemäß einem der Ansprüche 1 bis 8, wobei die härtbare Masse eine Einkomponentenmasse ist und ein durch kationische Polymerisation härtbares Harz auf Epoxidbasis sowie mindestens eine reversible thermochrome Komponente und wahlweise einen wärmelatenten Säurebildner umfasst.

10. Härtbare Masse nach Anspruch 9, **dadurch gekennzeichnet, dass** die Masse durch Einwirkung von aktinischer Strahlung härtbar ist.

11. Verwendung der härtbaren Masse nach einem der vorhergehenden Ansprüche 9 oder 10 zum Verkleben, Vergießen oder Beschichten von Substraten, insbesondere von optoelektronischen Bauteilen.

12. Verwendung nach Anspruch 11, **dadurch gekennzeichnet, dass** das Substrat ein Chipmodul ist, bevorzugt das Chipmodul einer Smartcard, wobei das Substrat bevorzugt in einem Verfahren nach den Ansprüchen 1 bis 8 verklebt oder vergossen wird.
